Europäisches Patentamt

European Patent Office

Office européen des brevets

(11) Publication number: **0 329 837**
**A2**

## (12) EUROPEAN PATENT APPLICATION

(21) Application number: 88120033.1

(22) Date of filing: 01.12.88

(51) Int. Cl.⁴: **B41J 3/30** , **G06F 3/12**

(30) Priority: 26.02.88 US 160608

(43) Date of publication of application:
30.08.89 Bulletin 89/35

(84) Designated Contracting States:
DE FR GB IT

(71) Applicant: Hewlett-Packard Company
P.O. Box 10301 3000 Hanover Street
Palo Alto California 94303-0890(US)

(72) Inventor: Pritchard, Thomas B.
3313 NE 110th Street
Vancouver, WA 98686(US)

(74) Representative: Patentanwälte Kohler -
Schwindling - Späth
Hohentwielstrasse 41
D-7000 Stuttgart 1(DE)

(54) **Bold enhancement generator.**

(57) A character enhancement generator (12) for use with a printer for the reproduction of bold typeface character designs, generally includes a dot sequence input terminal (100) for receiving input data. Two bold control input terminals (110, 111) enable the selection of the desired bold mode. A combinational logic circuit (102) is connected to the dot sequence input terminal and to the bold control input terminals, for implementing the selection of the desired bold mode. A memory circuit (104) is connected to the combinational logic circuit, for storing data indicative of the previous input sequence to provide the desired bold mode. An output terminal (106) is connected to the memory circuit, for supplying dot sequence output data.

FIG 1

EP 0 329 837 A2

## BOLD ENHANCEMENT GENERATOR

### BACKGROUND OF THE INVENTION

#### 1. Field Of The Invention

The present invention relates in general to dot matrix printing, and it more particularly relates to the algorithmic reproduction of bold typeface character designs in ink-jet and impact type printers.

#### 2. Background Information

Dot matrix printing, of the general type with which the present invention is concerned, relates to impact printing and ink-jet printing technologies. Impact type printers include print elements, which are "fired" to physically impact upon a recording medium.
In the ink-jet printing technique, droplets of ink are caused to impinge upon a recording medium, to form characters at very high speed.

Several conventional techniques have been employed for generating bold characters. One such technique, commonly used in impact type dot matrix printers, is to overstrike the dots during a return print path over the characters. While this overstriking technique may have been compatible with the impact type printheads, it has not proven to be sufficiently efficient to satisfy the throughput and contemporary data processing requirements, which impose severe demands on the ability to produce a high quality printout record at very high speed.

Other concerns associated with the use of the overstriking technique in "wet ink" technology, such as in ink-jet printers, have been the bleeding of the ink along the fibers of the paper or printing medium, the aesthetic appearance of the characters and the long dry time of the excess ink. Therefore, there is a need for a new and improved enhancement generator which produces bold effect in ink-jet printers as well as impact printers, at a relatively high speed, and with minimal undesirable bleeding.

Another attempted technique for generating bold characters has been to provide a duplicate set of bold characters, which are stored independently from the regular set of characters. This duplication of characters requires additional ROM size, and it generally increases the cost and size of the font cartridge.

It is therefore highly desirable to have a new and improved bold enhancement generator which, in addition to minimizing undesirable bleeding, reduces the required hardware components and memory size. The bold enhancement generator should reduce the cost and size of the font cartridge.

### SUMMARY OF THE INVENTION

It is therefore an object of the present invention to provide a new and improved bold enhancement generator adapted for use in ink-jet as well as impact printers.

It is another object of the present invention to provide a new and improved bold enhancement generator which produces bold typeface characters at a relatively high speed, and which substantially reduces undesirable bleeding, hardware components and memory size.

Briefly, the above and further objects and features of the present invention are realized by providing a new and improved bold enhancement generator for use with a printer, for the reproduction of bold typeface character designs.

The enhancement generator generally includes a dot sequence input terminal for receiving input data. Two bold control input terminals enable the selection of the desired bold mode. A combinational logic circuit is connected to the dot sequence input terminal and to the bold control input terminals, for implementing the selection of the desired bold mode. A memory circuit is connected to the combinational logic circuit, for storing data indicative of the previous input sequence to provide the desired bold mode. An output terminal is connected to the memory circuit, for supplying dot sequence output data.

### BRIEF DESCRIPTION OF THE DRAWINGS

The above-mentioned and other objects and features of the present invention, and the manner of attaining them will become apparent, and the invention itself will be best understood, by reference to the following description of the embodiments of the invention taken in conjunction with the accompanying drawings, wherein:

FIG.1 is a state diagram for a bold enhancement generator according to the present invention; and

FIG.2 is a circuit diagram of a bold enhancement generator for implementing the state diagram of FIG.1.

## DETAILED DESCRIPTION OF THE PREFERRED EMBODIMENT

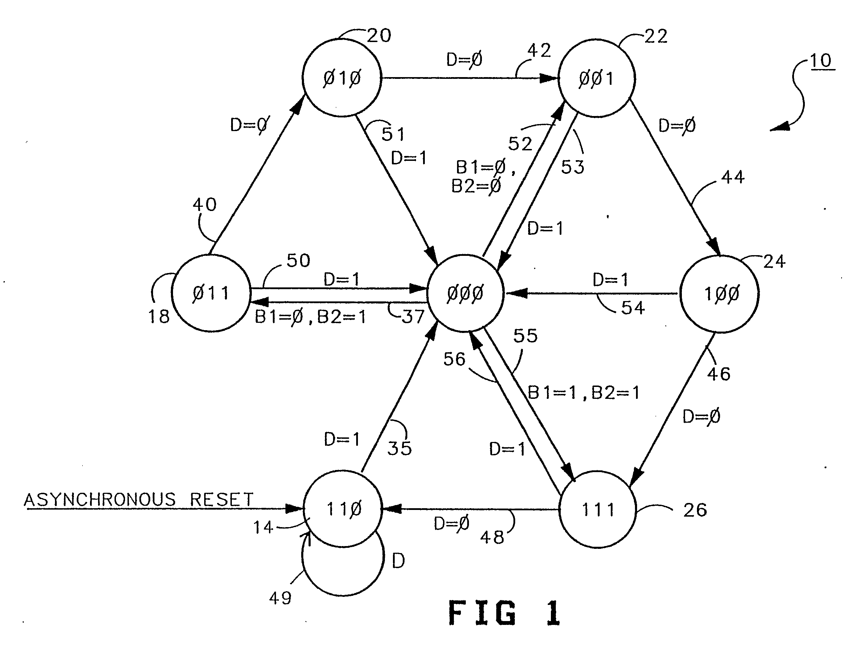

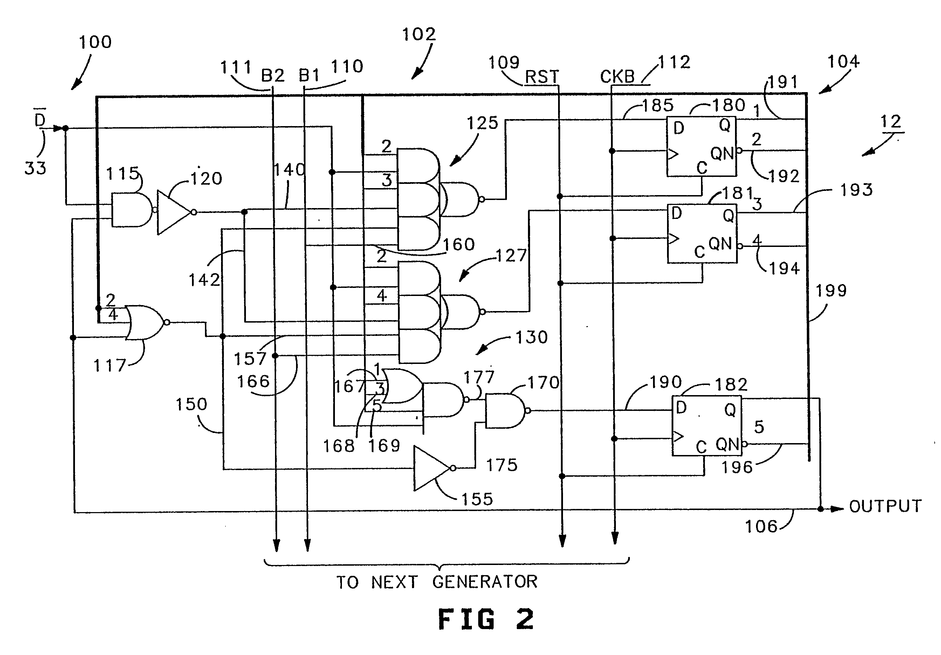

FIG. 1 illustrates a state diagram 10 for a bold enhancement generator 12, which will hereinafter be described in greater detail with respect to FIG. 2. The state diagram 10 permits the universal algorithmic reproduction of bold typeface character designs in dot matrix printers, such as ink-jet and impact type printers.

The diagram 10 illustrates the bold feature of the present invention, by selectively increasing the width of an upright character stem by one or two dots. However, it should become apparent to those skilled in the art, after reviewing the present description, that by expanding the presently disclosed invention, the width of a character can be increased by more than two dots.

Typically, the distance between two consecutive dots is 1/300 inch. Thus, if one dot were to be added to a character stem, the overall width of the stem would be increased by 1/300 inch. If two dots were to be added to the character stem, the overall width of the stem would be increased by 1/150 inch (2 x 1/300 inch). The overall increment to the width of the character should preferably be uniformly maintained along its length, in order to give the appearance of a smooth aesthetic typeface design, as well as uniform density or contrast distribution.

The state diagram 10 features an initialization or default state 14, a central or intermediate state 16, and a plurality of outer or peripheral states 18, 20, 22, 24 and 26. As it will described later in relation to the generator 12 of FIG. 2, the implementation of the states 14, 16, 18, 20, 22, 24 and 26 requires three memory elements or flip-flops.

In addition to the numeral reference designations of the states, each state has a distinct binary designation, for characterizing the dot sequence output of the generator 12. In this regard, the least significant bit, on the right side of the string of the reference binary digits, indicates the dot sequence output of the generator 12.

For instance, the outer state 18 is designated by "011", to indicate that the dot sequence output state of the generator 12 is "1". On the other hand, the initialization state 14 is designated by "110", to indicate that the dot sequence output of the generator 12 is "0". Similarly, the states 16, 20, 22, 24 and 26 indicate that the dot sequence outputs of the generator 12 are "0", "0", "1", "0" and "1" respectively.

The $D = 1$ designation indicates the current state of the dot sequence input is ON, while the $D = 0$ designation indicates that the state of the dot sequence input is OFF.

The $B_1$ and $B_2$ designations refer to the selected bold modes. For instance, the combination ($B_1 = 0$, $B_2 = 1$) instructs the bold enhancement generator 12 to increase the width of a character stem by two dots, in order to produce a wide bold effect. The combination ($B_1 = 0$, $B_2 = 0$) instructs the bold enhancement generator 12 to increase the width of a character stem by one dot for producing a narrow bold effect. The combination ($B_1 = 1$, $B_2 = 1$) instructs the printer to produce no bold effect.

In operation, when the bold enhancement generator 12 is in the initial initilization state 14, the output of the generator 12 is and remains "0", as long as a dot is not received at the input 33 of the generator 12. (FIG. 2). When a dot is received at the input 33, a transition occurs from the initialization state 14 to the central state 16, as indicated by the arrow 35.

Next, a determination is made as to which bold mode is desired. Thus, if two dots were to be added to produce the bold effect, the ($B_1 = 0$, $B_2 = 1$) combination would be selected, and a transition occurs from the central state 16 to the outer state 18, as indicated by the arrow 37. A series of successive transitions through the peripheral states 20, 22, 24 and 26 occurs, as indicated by the arrows 40, 42, 44 and 46 respectively. A final transition then takes place from the outer state 26 to the initialization state 14, as indicated by the arrow 48.

In certain applications, it may be desired to cause the output of the generator 12 to alternate between a "0" and a "1", for preventing the formation of two successive dots, in order to provide a high placement resolution. In this regard, if the generator 12 were in the outer state 18, and a dot is received at the input 33, a transition occurs to the central state 16, as indicated by the arrow 50.

If the next received input is a "1", a transition occurs from the central state 16 to the outer state 18. The inter-transition between the two states 18 and 16 continues until the received input data is a "0" and the generator 12 is in the outer state 18, in which case a transition occurs to the next adjacent outer state 20, as indicated by the arrow 40.

Subsequently, and depending on the input data, a transition is made to either the central state 16 or to the next adjacent outer state 22. In this regard, if the input data is a "1"; the transition occurs to the central state 16, as indicated by the arrow 51. Whereupon, a determination is once again made as to which bold mode is desired.

Thus, if it is desired to add two dots to produce the bold effect, the ($B_1 = 0$, $B_2 = 1$) combination is once again selected, and another transition occurs from the central state 16 to the outer state 18, as indicated by the arrow 40. If it is desired to add only one dot, the ($B_1 = 0$, $B_2 = 0$) combination is selected and a transition occurs to the outer state 22, as indicated by the arrow 52. If however, it is determined that no bold effect is desired, then the ($B_1 = 1$, $B_2 = 1$) combination is selected and a transition occurs to the outer state 26, as indicated by the arrow 55.

If the generator 12 is in the outer state 20, and the input data is a "0", a transition occurs to the next adjacent outer state 22, as indicated by the arrow 42. Thereafter, the foregoing process is repeated, and the next transition occurs to either the central state 16 or the next adjacent outer state 24. In this regard, if the input data is a "1", the transition occurs to the central state 16, as indicated by the arrow 52. Whereupon, a determination is once again made as to which bold mode is desired, and one of the three previously described transitions is then selected.

If however, the input data is a "1", while the generator is in the outer state 22, a transition occurs to the next adjacent outer state 24, as indicated by the arrow 44. Whereupon the previous logic steps are repeated, and a transition can occur to either the central state 16, as indicated by the arrow 54, or to the next adjacent outer state 26, as indicated by the arrow 46. A final transition thereafter occurs to the initialization state 14, as indicated by the arrow 48.

As an illustration for the implementation of the state diagram 10, when two dots are added to the width of the character stem, to produce the bold effect, a dot sequence trail comprising the following data:
D = 1 0 1 0 0 1 0 0 0 0 0 0 0,
results in the following data at the output 106 of the generator 12, illustrating the shifting of the input data by dot space, as well as the addition of two dots to the right edge of the character stem:
Outpout = 0 1 0 1 0 0 1 0 1 0 1 0 0.

FIG.2 is a circuit diagram of the bold enhancement generator 12 for implementing the state diagram 10 of FIG.1, for each independent print element or nozzle. While only one bold enhancement generator 12 is illustrated in FIG.2, it should be understood that a plurality of substantially similarly designed bold enhancement generators will be connected in a generally parallel manner. In this regard, each one of the bold enhancement generators independently controls one nozzle or print element of the printhead.

The generator 12 generally includes an input stage 100, a combinational logic circuit 102, a memory circuit 104 and an output lead 106. The input stage 100 generally includes an inverted input lead 33, for receiving the input data, a $B_1$ lead 110 for receiving the bold mode control data, and a $B_2$ lead 111, for similarly receiving the bold mode control data. The input stage 100 further includes an asynchronous reset lead 109 to initialize the memory circuit 104. A clock lead 112 transfers the output of the combinational logic circuit 102 into the memory circuit 104.

The combinational logic circuit 102 generates the next state to be triggered by the lead 112. It generally includes a NAND gate 115, which is connected at one of its inputs to the dot sequence input lead 33. a NOR gate 117 has its input simultaneously connected to one input of the NAND gate 115, and to the dot sequence output lead 106. An inverter 120 has its input connected to the output of the NAND gate 115.

Two AND/NOR gates 125 and 127 and one OR/NAND gate 130 have their inputs simultaneously connected to the input lead 33, the input of the NOR gate 117, and to the memory circuit 104. The AND/NOR inverter gate 125 further has one of its inputs 140 simultaneously connected to the output of the inverter gate 120 as well as to an input 142 of the AND/NOR gate 127.

Another input 150 of the AND/NOR gate 125 is simultaneously connected to the output of the NOR gate 117, to the input of an inverter gate 155, and to one input 157 of the AND/NOR gate 127. Another input 160 of the AND/NOR gate 125 is connected to the $B_1$ input lead 110, while the AND/NOR gate 127 has one of its inputs 166 connected to the $B_2$ input lead 111.

The OR/NAND gate 130 has its inputs generally designated at 167, 168 and 169 connected to corresponding outputs of the memory circuit 104. A NAND gate 170 has one of its inputs 175 connected to the output of the OR/NAND gate 130, and to the output of the inverter gate 155.

The memory circuit 104 generally includes three flip-flops 180, 181 and 182. The flip-flop 180 has its D-input 185 connected to the output of the AND/NOR gate 125. Similarly, the flip-flop 181 has its D-input 187 connected to the output of the AND/NOR gate 127. The flip-flop 183 has its D-input 190 connected to the output of the NAND gate 170.

The Q and QN outputs 191, 192, 193, 194 and 196 of the flip-flops 180, 181 and 182 respectively, are connected to the combinational logic circuit 102, via the bus 199. The Q-output of the flip-flop 182 is connected to the output lead 106, for providing the dot sequence output of the generator 12.

While a particular embodiment of the present invention has been disclosed, it is to be understood that various different modifications are possible and are contemplated within the true spirit and scope of the appended claims. There is no intention therefore, of limitations to the exact abstract or disclosure herein presented.

## Claims

1. A character enhancement generator (12) for use with a printer for the reproduction of bold typeface character designs, comprising:

a) input means (100) for receiving a sequence of input data;

b) control means (110, 111) for enabling the selection of a desired bold mode;

c) combinational logic means (102), connected to said input means and to said control means, for implementing the selection of the desired bold mode;

d) memory means (104), connected to said combinational logic means, for storing data indicative of the implementation of the desired bold mode by said combinational logic means; and

e) output means (106), connected to said memory means and to said combinational logic means, for supplying a sequence of output data.

2. The generator as defined in claim 1, wherein said input means includes an inverted input lead (33).

3. The generator as defined in claim 1, wherein said control means includes a plurality of bold mode control leads (110, 111), for receiving data indicative of the selected bold mode.

4. The generator as defined in claim 3, wherein said control means includes two bold mode control leads (110, 111).

5. The generator as defined in claim 1, wherein said combinational logic means includes at least one logic gate (115), and wherein the output of said logic gate is connected to said memory means.

6. The generator as defined in claim 1, wherein said memory means includes at least one memory element.

7. The generator as defined in claim 6, wherein said memory element includes a flip-flop (180).

8. The generator as defined in claim 4, wherein said memory means includes three memory elements (180, 181, 182), for causing the output of the generator to transit among at least seven states.

9. The generator as defined in claim 8, wherein the output transits among seven states.

10. The generator as defined in claim 9, wherein said combinational logic means includes three logic gates, and wherein the output of each one of said logic gates is connected to the input of a corresponding one of said memory elements.

11. A character enhancement method for use in conjunction with a printer to reproduce bold typeface character designs, comprising the steps of:

a) receiving input data;

b) controlling the selection of a desired bold mode;

c) implementing the selection of the desired bold mode;

d) storing data indicative of the implementation of the desired bold mode selection; and

e) supplying data indicative of the output of the generator.

12. The character enhancement method as defined in claim 11, wherein said step of receiving input data includes using an inverter gate (120) at the input of the generator.

13. The character enhancement method as defined in claim 11, wherein said step of controlling the selection of a desired bold mode includes selecting the desired bold mode from a plurality of available bold modes.

14. The character enhancement method as defined in claim 11, wherein said step of implementing the selection of the desired bold mode includes causing the generator to transit among an initialization state, an intermediate state, and a plurality of outer states.

15. The character enhancement method as defined in claim 13, wherein said step of implementing the selection of the desired bold mode includes causing the generator to transit among an initialization state, an intermediate state, and five outer states.

16. The character enhancement method as defined in claim 15, wherein said step of implementing includes selecting one of two bold modes (B1, B2).

17. The character enhancement method as defined in claim 16, wherein said step of implementing includes enlarging the width of a character stem by one dot.

18. The character enhancement method as defined in claim 16, wherein said step of implementing includes enlarging the width of a character stem by two dots.

19. The character enhancement method as defined in claim 16, further including selecting a nonbold mode.

20. A character enhancement generator for use with a printer for the reproduction of bold typeface character designs, the printer having a printhead with a plurality of print elements, the character enhancement generator comprising a plurality of substantially similar bold enhancement generators (12) connected in a generally parallel manner, wherein each one of said bold enhancement generators controls at least one print element of the printhead, and wherein each one of said bold enhancement generators includes:

a) input means (100) for receiving a sequence of input data;

b) control means (110, 111) for enabling the selection of a desired bold mode;

c) combinational logic means (102), connected to said input means and to said control means, for implementing the selection of the desired bold mode;

d) memory means (104), connected to said combinational logic means, for storing data indicative of the implementation of the desired bold mode by said combinational logic means; and

e) output means (106), connected to said memory means and to said combinational logic means, for supplying a sequence of output data.

10

ØØ1 22

1ØØ 24

D=Ø 44

D=Ø 46

111 26

D=1 54

B1=1,B2=1 55

D=1 53

B1=Ø,B2=Ø 52

ØØØ

D=1 56

D=1 37

B1=Ø,B2=1

D=1 50

D=Ø 42

Ø1Ø 20

D=1 51

Ø11 18

D=Ø 40

11Ø

D=Ø 48

D=1 35

D 49

ASYNCHRONOUS RESET 14

FIG 1

FIG 2

EP 0 329 837 A2